# EUROPEAN PATENT APPLICATION

(11) **EP 2 775 782 A1**
(43) Date of publication of application: **10.09.2014**
(21) Application number: 13305257.1
(22) Date of filing: 07.03.2013
(51) Int. Cl.: H04W 88/08, H04B 10/112, H04B 10/2575, H04W 24/02

(54) **Base station and methods**

(71) Applicant: ALCATEL LUCENT, 92100 Boulogne-Billancourt (FR)
(72) Inventor: Claussen, Holger, DUBLIN, 15 (IE); Razavi, Rouzbeh, DUBLIN, 15 (IE)
(74) Representative: Leppard, Andrew John

(57) **Abstract**

Abase station, methods and a computer program product are disclosed. Abase station controller unit for supporting communication with user equipment of a wireless telecommunications network comprises: processor logic operable to convert between backhaul signals for communication with a network node of said wireless telecommunications network and radio frequency signals for communication with said user equipment; and a controller unit transceiver operable to convert between said radio frequency signals and wireless link signals and to support communication of said wireless link signals with a base station remote unit. This split-architecture approach enables the base station remote unit to be located away from the base station controller units at a convenient location without the need to provide a wired connection to the core networks due to the provision of the wireless link between the base station remote unit and the base station controller unit acting as a relay. This significantly increases the possible deployment locations for the base station since the base station remote unit does not need to have a wired link with the core network and instead connects wirelessly to the network via the base station controller unit.

## Description

### FIELD OF THE INVENTION

The present invention relates to a base station, methods and a computer program product.

### BACKGROUND

In a cellular wireless telecommunications network, radio coverage is provided by areas known as cells. A base station is located in each cell to provide the radio coverage area or cell. Traditional base stations provide coverage in relatively large geographical areas and these are often referred to as macro cells. It is possible to provide smaller sized cells, often within a macro cell. Such smaller sized cells are sometimes referred to as micro cells, pico cells or femto cells. Such small cells are typically established by providing a small cell base station that provides radio coverage having a relatively limited range, typically within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small cell network.

Such small cells have generally been provided where the communication coverage provided by the macro cell is poor, or where a user wishes to use an alternative communications link provided locally by the small cell base station, to communicate with the core network. Such a situation might arise where, for example, a user has a pre-existing communications link and the user wishes to utilise that link in preference to that provided by the macro cell network provider to communicate with the core network. However, increasingly, small cells are being deployed in areas of high traffic demand (often referred to as hot spots), where that demand risks overloading the macro cell. Users can then be handed over to the small cell in order to reduce the traffic load on the macro cell.

Although providing such small cells can provide many advantages, deployment can be difficult.

Accordingly, it is desired to provide an improved base station.

### SUMMARY

According to a first aspect, there is provided a base station controller unit for supporting communication with user equipment of a wireless telecommunications network, the base station controller unit comprising: processor logic operable to convert between backhaul signals for communication with a network node of the wireless telecommunications network and radio frequency signals for communication with the user equipment; and a controller unit transceiver operable to convert between the radio frequency signals and wireless link signals and to support communication of the wireless link signals with a base station remote unit.

The first aspect recognizes that a problem with existing small cell base stations is that the range of locations which they may be deployed is limited since they typically require a wired backhaul communications link with the core network. Provisioning such a wired backhaul link using, for example, a wired broadband connection, severely limits the possible locations for a small cell base station.

Accordingly, a base station controller unit is provided. The base station controller unit supports communication with user equipment within the wireless telecommunications network. The control unit may comprise processor logic which converts between backhaul signals and radio frequency signals. The backhaul signals may be transmitted between the base station controller unit and a network node of the wireless telecommunications network such as, for example, a network node of the core network. The radio frequency signals may be used for communication with user equipment within the wireless telecommunications network. The base station controller may also comprise a control unit transceiver which converts between the radio frequency signals and wireless signals. Accordingly, the transceiver may convert radio frequency signals in the form ready for transmission to user equipment into wireless link signals. The wireless link signals are transmitted between the base station controller unit and a base station remote unit which may be located elsewhere.

This split-architecture approach enables the base station controller unit to communicate with the core network and convert between radio frequency signals which are used to communicate with user equipment and a wireless signal which is transmitted between the base station controller unit and the base station remote unit. This enables the base station remote unit to be located away from the base station controller units at a convenient location without the need to provide a wired connection to the core networks due to the provision of the wireless link between the base station remote unit and the base station controller unit acting as a relay. This enables the radio frequency signals to be relayed over the wireless link between the base station remote unit and the base station controller unit. This significantly increases the possible deployment locations for the base station since the base station remote unit does not need to have a wired link with the core network and instead connects wirelessly to the network via the base station controller unit. Also, by performing all the encoding and decoding of the radio frequency signals within the base station controller unit reduces the level of processing required in the base station remote unit, which reduces its size and power consumption and further increases the deployment location options.

In one embodiment, the radio frequency signals comprise physical layer signals and the processor logic is operable to encode between the backhaul signals and the physical layer signals. Accordingly, the radio frequency signals converted by the processor logic are those physical layer signals which would otherwise be transmitted and received via an antenna by the base station. That is to say that the physical layer signals are signals which have been fully encoded by the different layers of the protocol stack and are in a standards-compliant form that are transmittable between the user equipment and base station with no additional processing or encoding. Instead of transmitting the physical layer signals, the control unit instead converts between the physical layer signals and wireless signals to enable communication between the base station controller unit and the base station remote unit in order to relay the physical layer signals to and from the base station remote unit.

In one embodiment, the wireless link signals comprise optical signals and the controller unit transceiver is operable to convert between the radio frequency signals and the optical signals. Accordingly, the wireless link may be established optically between the controller unit and the base station remote unit. Using an optical link reduces controlled spectrum use and provides for a high bandwidth, high directivity, low interference connection over which the converted radio frequency signals may be transmitted.

In one embodiment, the controller unit transceiver comprises an encoder operable to encode the radio frequency signals as the optical signals and a decoder operable to decode the optical signals as the radio frequency signals.

In one embodiment, the radio frequency signals comprise analogue signals and the optical signals comprise digital signals and the encoder is operable to encode the analogue radio frequency signals as the digital optical signals and the decoder is operable to decode the digital optical signals as the analogue radio frequency signals. Accordingly, the conversion may occur between the analogue radio frequency signals and digital optical signals providing the wireless link.

In one embodiment, the encoder comprises a sigma delta modulator and the decoder comprises a low pass filter. It will be appreciated that a sigma delta modulator is a particularly low-power and efficient unit to convert the analogue radio frequency signals to digital optical signals. Likewise, the low pass filter is a particularly low power and efficient unit for converting the digital optical signals back to analogue radio frequency signals.

In one embodiment, the controller unit transceiver comprises a laser and a detector operable to support communication of the wireless link signals. A laser provides for a particularly efficient and highly directive wireless link. In one embodiment, the laser both supports communication of the wireless link signals and provides optical power to power the base station remote unit. In one embodiment, the controller unit comprises another laser to provide optical power to power the base station remote unit.

In one embodiment, the laser is operable to transmit the optical signals and the detector is operable to receive the optical signals.

In one embodiment, the controller unit transceiver is operable to convert downlink radio frequency signals to downlink optical signals and to transmit the downlink optical signals, and to receive uplink optical signals and to convert the uplink optical signals to uplink radio frequency signals.

In one embodiment, the processor logic is operable to convert between a plurality of backhaul signals and a plurality of radio frequency signals for communication with user equipment. Accordingly, a single base station controller unit may support communication with a plurality of different radio frequency signals, each provided over a corresponding one of a plurality of wireless links. Hence, a single base station controller may support multiple base station remote units, enabling efficient use of processing resources.

In one embodiment, the controller unit transceiver is operable to convert between the plurality of radio frequency signals and a plurality of wireless link signals.

In one embodiment, each of the plurality of wireless link signals is encoded as a corresponding different optical signal.

In one embodiment, each optical signal is encoded with at least one of differing frequency, polarisation, temporal and spatial characteristics.

In one embodiment, the controller unit is operable to prevent transmission of the wireless signals to deactivate an associated remote unit. Accordingly, base station remote units may be deactivated simply by preventing transmission of the wireless signals to that remote unit. In one embodiment, the base station remote units may be deactivated simply by preventing transmission of an optical power transmission to that remote unit.

In one embodiment, the base station controller unit comprises a wireless link signal redirector operable to redirect a path of the wireless link signal between the controller unit and an associated remote unit. Accordingly, where line of sight is not possible, a director may be located in order to redirect the path of the wireless signal between the base station controller unit and the associated base station remote unit.

In one embodiment, the wireless link signal redirector comprises one of a reflector, a refractor and a waveguide.

According to a second aspect, there is provided a base station remote unit for supporting communication with user equipment of a wireless telecommunications network, the base station remote unit comprising: a remote unit transceiver operable to support communication of wireless link signals with a base station controller unit and to convert between the wireless link signals and radio frequency signals; and a remote unit antenna operable to support communication of the radio frequency signals with the user equipment.

In one embodiment, the radio frequency signals comprise physical layer signals and the processor logic is operable to encode between the backhaul signals and the physical layer signals.

In one embodiment, the wireless link signals comprise optical signals and the remote unit transceiver converts between the radio frequency signals and the optical signals. In one embodiment, the remote unit transceiver each comprise an encoder operable to encode the radio frequency signals as the optical signals and a decoder operable to decode the optical signals as the radio frequency signals.

In one embodiment, the radio frequency signals comprise analogue signals and the optical signals comprise digital signals and the encoder is operable to encode the analogue radio frequency signals as the digital optical signals and the decoder is operable to decode the digital optical signals as the analogue radio frequency signals.

In one embodiment, the encoder comprises a sigma delta modulator and the decoder comprises a low pass filter.

In one embodiment, the remote unit transceiver each comprises a laser and a detector operable to support communication with the wireless link signals.

In one embodiment, the laser is operable to transmit the optical signals and the detector is operable to receive the optical signals.

In one embodiment, the remote unit transceiver is operable to convert downlink optical signals to downlink radio frequency signals, and to receive uplink radio frequency signals and to convert the uplink radio frequency signals to uplink optical signals, and to transmit the uplink optical signals.

In one embodiment, the remote unit transceiver is operable to convert transmitted downlink radio frequency signals to predistortion optical signals, and to transmit the predistortion optical signals. Accordingly, predistortion signals may be transmitted between the base station remote unit and the base station controller unit in order to enable the base station controller unit to apply the appropriate predistortion to the radio frequency signals generated from the backhaul signals.

In one embodiment, the base station remote unit comprises a plurality of the remote units, each operable to support communication with the controller unit using a corresponding plurality of wireless link signals.

In one embodiment, the base station remote unit comprises an extractor operable to extract energy from a wireless link signal to power that remote unit. Accordingly, as well as being provided with a wireless connection between the base station remote unit and the base station controller unit, wireless power may also be provided to the base station remote unit. This provides for an increased choice of location of the remote unit since a wired power connection to the base station remote unit is not required.

In one embodiment, the remote unit transceiver comprises the energy extractor operable to extract energy from the wireless link signals to power that remote unit.

In one embodiment, the extractor comprises a photovoltaic collector.

According to a third aspect, there is provided a base station controller unit method for supporting communication with user equipment of a wireless telecommunications network, the method comprising: (i) converting between backhaul signals for communication with a network node of the wireless telecommunications network and radio frequency signals for communication with the user equipment; and (ii) converting between the radio frequency signals and wireless link signals and supporting communication of the wireless link signals with a base station remote unit.

In one embodiment, the radio frequency signals comprise physical layer signals and the step (i) comprises encoding between the backhaul signals and the physical layer signals.

In one embodiment, the wireless link signals comprise optical signals and the step (ii) comprises converting between the radio frequency signals and the optical signals.

In one embodiment, the step (ii) comprises encoding the radio frequency signals as the optical signals and decoding the optical signals as the radio frequency signals.

In one embodiment, the radio frequency signals comprise analogue signals and the optical signals comprise digital signals and the step of encoding comprises encoding the analogue radio frequency signals as the digital optical signals and the step of decoding comprises decoding the digital optical signals as the analogue radio frequency signals.

In one embodiment, the step of encoding comprises encoding using a sigma delta modulator and the step of decoding comprises decoding using a low pass filter.

In one embodiment, the step (ii) comprises converting downlink radio frequency signals to downlink optical signals and transmitting the downlink optical signals, and receiving uplink optical signals and converting the uplink optical signals to uplink radio frequency signals.

In one embodiment, the step (i) comprises converting between a plurality of backhaul signals and a plurality of radio frequency signals for communication with user equipment.

In one embodiment, the step (ii) comprises converting between the plurality of radio frequency signals and a plurality of wireless link signals.

In one embodiment, each of the plurality of wireless link signals is encoded as a corresponding different optical signal.

In one embodiment, each optical signal is encoded with at least one of differing frequency, polarisation, temporal and spatial characteristics.

In one embodiment, the method comprises the step of preventing transmission of the wireless signals to deactivate an associated remote unit..

According to a fourth aspect, there is provided a base station remote unit method for supporting communication with user equipment of a wireless telecommunications network, the method comprising: (i) supporting communication of wireless link signals with a base station controller unit and converting between the wireless link signals and radio frequency signals; and (ii) supporting communication of the radio frequency signals with the user equipment.

In one embodiment, the radio frequency signals comprise physical layer signals and the step (i) comprises encoding between the backhaul signals and the physical layer signals.

In one embodiment, the wireless link signals comprise optical signals and the step (i) comprises converting between the radio frequency signals and the optical signals.

In one embodiment, the step (i) comprises encoding the radio frequency signals as the optical signals and decoding the optical signals as the radio frequency signals.

In one embodiment, the radio frequency signals comprise analogue signals and the optical signals comprise digital signals and the encoding comprises encoding the analogue radio frequency signals as the digital optical signals and the decoding comprises decoding the digital optical signals as the analogue radio frequency signals.

In one embodiment, the encoding comprises encoding using a sigma delta modulator and the decoding comprises decoding using a low pass filter.

In one embodiment, the step (i) comprises converting downlink optical signals to downlink radio frequency signals, and receiving uplink radio frequency signals and converting the uplink radio frequency signals to uplink optical signals, and transmitting the uplink optical signals.

In one embodiment, the step of converting transmitted downlink radio frequency signals to predistortion optical signals, and transmitting the predistortion optical signals.

In one embodiment, the method comprises extracting energy from a wireless link signal to power that remote unit.

In one embodiment, the method comprises extracting energy from the wireless link signals to power that remote unit.

In one embodiment, the step of extracting comprises extracting using a photovoltaic collector.

According to a fifth aspect, there is provided a computer program product operable, when executed on a computer, to perform the method steps of the third and/ or fourth aspects.

According to a sixth aspect, there is provided a base station comprising the base station controller unit of the first aspect and the base station remote unit of the second aspect.

In embodiments, the base station comprises the features of the first and/ or second aspects set out above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the arrangement of a small cell base station according to one embodiment;
Figure 2 illustrates the arrangement of the small cell controller and the small cell remote transceiver unit in more detail;
Figure 3 illustrates conversion between an analogue radio frequency signal and a digital signal using pulse density modulation; and
Figure 4 illustrates the estimated energy consumption of components of the small cell transceiver unit.

### DESCRIPTION OF THE EMBODIMENTS

### Overview

Before discussing the embodiments in any more detail, first an overview will be provided. As mentioned above, the placement or deployment options for locating small cells is typically very restricted in order that the necessary power and backhaul connections can be provided to support that small cell. Embodiments provide a modified small cell base station architecture which provides low power consumption and wireless links which significantly increases the range of placement or deployment options for such small cell base stations. In particular, an architecture is provided which splits the small cell base station and moves the signal processing logic to a first location where power and a wired backhaul connection is available and moves the transmitter unit to a second, remote location. Because the signal processing has been removed from the remote location, the power consumption of the transmitter unit is very low which removes the need for any direct connection with a wired power supply. Also, providing a wireless connection between the first location and the second location removes the need for any wired connection between the transmitter unit and the network backhaul. This architecture significantly increases the deployment options since no wired connections need to be made to the transmitter unit. This provides for enormous flexibility the deployment small cells.

### Architecture Overview

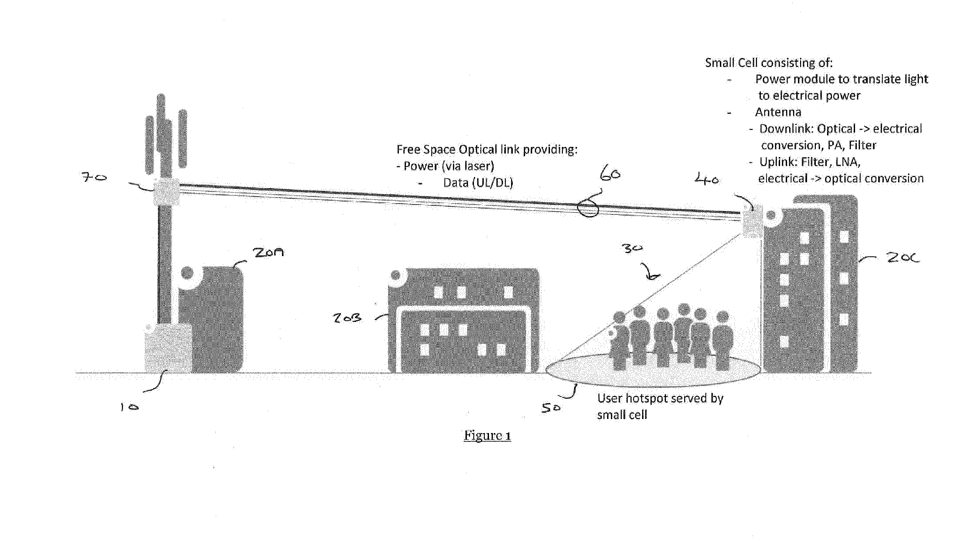

Figure 1 illustrates the arrangement of a small cell base station according to one embodiment. As can be seen, a macro cell base station, generally 10, is provided which provides for macro cell coverage. Various different buildings 20A to 20C are provided within the macro cell. In the vicinity of building 20C is a user hotspot, generally 30.

A small cell remote transceiver unit 40 is provided which supports a small cell 50 in the vicinity of the user hotspot 30. As will be explained in more detail below, the small cell remote transceiver unit 40 requires no direct wiring to a power supply, nor does it require any direct wiring to the network backhaul. Instead, the small cell remote transceiver unit 40 has autonomous power generation which is sufficient to power itself and to support the small cell 50. Also, a wireless link 60 is provided between the small cell remote transceiver unit 40 and a small cell controller unit 70. This arrangement enables small cells to be deployed independent of any power or backhaul infrastructure, such as mains power and Ethernet or fibre connections at the deployment site. This is achieved through the provision of wireless power or the capability of energy harvesting at the small cell remote transceiver unit 40, together with the wireless link 60 between the small cell remote transceiver unit 40 and the small cell controller 70.

The energy-consuming processing functions such as the encoding and decoding of the radio frequency (RF) signals transmitted and received within the small cell 50 into backhaul signals for transmission to the network are moved out of the small cell remote transceiver unit 40 and into the small cell controller 70. This leaves only the minimal necessary components to be powered locally at the small cell remote transceiver unit 40, which makes it easier to power the small cell remote transceiver unit 40 either wirelessly or using autonomous energy harvesting. Signal processing is then performed at the small cell controller 70, where a wired power connection and wired backhaul connection are available. In this example, the small cell controller 70 is co-located with the macro base station, although it will be appreciated that this need not be the case.

The communication between the small cell controller 70 and the small cell remote transceiver unit 40 is performed via the wireless link 60. In this example, a free-space optical link is provided, but it will be appreciated that other wireless technologies may be utilised. In order to reduce the power consumption at the small cell remote transceiver unit 40, the optical signals are essentially uncoded (or coded with minimal complexity) in order to provide an optical signal representation of the radio frequency signals. For example, the radio frequency signals may be provided to a sigma-delta modulator to generate an optical signal from the radio frequency signal which can be transmitted using, for example, a laser and detected using a detector and then demodulated back to the radio frequency signal using a simple low-pass filter. Alternatively, the optical signals can be used to directly drive a class-O amplifier.

It will be appreciated that such conversion from a radio frequency signal to an optical signal and back again occurs in both directions (i.e. both for uplink and downlink signals transmitted over the optical link 60 between the small cell controller 70 and the small cell remote transceiver unit 40). In the event that multiple uplink and downlink radio frequency signals need to be transmitted over the optical link 60 (for example, uplink I, uplink Q, downlink I, downlink Q), these optical signals can be distinguished by using different frequencies (colours), polarisation, time modulation or spatial modulation (for example, using different beams). Alternatively, the signals can be modulated onto a power beam.

In overview, the architecture can be explained as follows. For downlink, the small cell controller 70 receives backhaul signals containing information and data and generates downlink radio frequency signals which would then, in a conventional base station, be used to drive the base station antenna (via an amplifier and any filters). However, with this architecture, these radio frequency signals are not supplied to drive the antenna but are instead converted into optical signals for transmission over the optical link to the small cell remote transceiver unit 40. The small cell remote transceiver unit 40 converts these optical signals back into the original radio frequency signals, and supplies these to its antenna (via an amplifier and any filters). The antenna then transmits these signals within the small cell 50. Likewise, in uplink, the small cell transceiver 40 receives uplink radio frequency signals at its antenna from user equipment. These uplink radio frequency signals are not processed by the small cell remote transceiver unit 40, but are instead simply converted into uplink optical signals and transmitted over the optical link 60 to the small cell controller 70. The small cell controller 70 then converts the optical signals back into the original uplink radio frequency signals and processes these to extract information and data to be transmitted via the backhaul with the network.

By removing the energy consuming substantive processing (encoding/decoding, etc.) from the small cell remote transceiver unit 40 minimises the power consumption of the small cell remote transceiver unit 40. This enables the small cell remote transceiver unit to either autonomously generate power (using a renewable energy power generator such as combined wind and solar), or power may be provided over the optical connection using, for example, a photovoltaic cell which extracts energy from the optical signal provided by, for example, a laser. This may avoid the need for battery back-up at the small cell remote transceiver unit 40 which may otherwise be required when using renewable energy generators. In addition, this enables idle mode control of the small cell base station to be moved to the small cell controller 70, where a decision can be made to deactivate a small cell by ceasing to supply it power via the optical connection 60.

Although a single small cell remote transceiver unit 40 is illustrated, it will be appreciated that the small cell controller 70 may support a plurality of such small cell transceiver units 40. Each of these may be provided with a separate optical link in order to support separate cells, but share common processing resources within the small cell controller 70.

In order to accommodate deployments where it is not possible to achieve line of sight between the small cell controller 70 and the small cell transceiver units 40, optical backhaul repeaters or mirrors (not shown) may be utilised to redirect the line of sight of the optical link 60. The optical backhaul repeaters may be wirelessly powered in a similar manner to the small cell remote transceiver unit 40.

### Architecture Detail

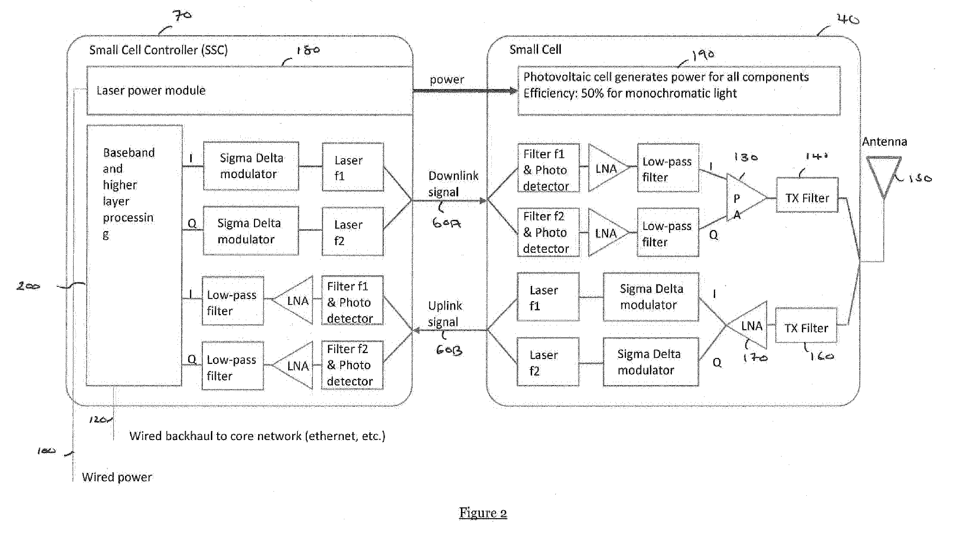

The arrangement of the small cell controller 70 and the small cell remote transceiver unit 40 according to one embodiment is illustrated in more detail in Figure 2. As mentioned above, removing the reliance on mains power and on a wired backhaul can significantly increase the deployment options for small cells. As a result, these small cells can be deployed at many more locations, and in far greater numbers than currently possible. As mentioned above, to enable both wireless power and wireless backhaul, the architecture minimises the energy consumption at the remote small cell remote transceiver unit 40. As can be seen in Figure 2, the key difference compared to the current architecture is that processing is moved from the small cell remote transceiver unit 40 to the small cell controller 70. A wireless connection is provided between the small cell remote transceiver unit 40 and the small cell controller 70 using a free-space optical link 60. In this embodiment, power for the small cell remote transceiver unit 40 is provided wirelessly. This architecture is compatible with current standards. It allows small cells to be deployed by simply attaching them to buildings, lampposts or other structures in a vicinity where small cells are required without the need for local power or for a wired communications link. As a result, the deployment and operational costs are reduced dramatically and the deployment options are increased.

As can be seen in Figure 2, the small cell controller 70 has a wired link 100 to a power source, in addition to a wired connection 120 with the core network (not shown). All signal processing (such as physical and higher layer processing) to produce and decode radio frequency signals is then performed within the small cell controller 70. Rather than applying the downlink radio frequency signals via any amplifier and filter to antenna, they are instead converted into an downlink optical signal and transmitted over an optical downlink 60A to the small cell remote transceiver unit 40. The small cell remote transceiver unit 40 converts the received downlink optical signal back into the original downlink radio frequency signals and applies these via an amplifier 130 and filter 140 (which reduces out of band signals) to antenna 150 which transmits the downlink radio frequency signals to user equipment with the small cell 50.

Uplink radio frequency transmissions received from the user equipment within the small cell 50 are received by antenna 150 and transmitted via the filter 160 and amplifier 170 to be converted into an uplink optical signal for transmission over an optical uplink 60B. The small cell controller receives the uplink optical signal and converts this back into the original uplink radio frequency signal for subsequent processing.

### Power

A laser power module 180 transmits an optical power beam 60C which is received by a photovoltaic cell 190 at the small cell remote transceiver unit 40 to generate power which powers the small cell remote transceiver unit 40.

Although in this embodiment a separate power optical link 60C is shown, it will be appreciated that the power could instead be provided by the optical downlink 60A.

Also, it will be appreciated that pre-distortion values may be signalled between the small cell controller 70 and the small cell remote transceiver unit 40 either separately or by modulation of the existing optical links. For example, an representation of the downlink radio frequency signal transmitted by antenna 150 can be signalled over the optical uplink 60C to the small cell controller 70.

### Processing at the small cell controller

While the energy consumption caused by radio frequency transmissions can be reduced significantly by shrinking the size of the small cell 50 (and the corresponding transmission power), the energy for signal processing (for example, turbo decoding, etc.) remains high, given that the small cell should still be able to provide the same capacity. In fact, such processing is becoming more complex when advanced techniques such as network multiple-input multiple-output (MIMO) and interference cancellation techniques are becoming more widely used. Accordingly, the signal processing is removed from the small cell remote transceiver unit 40 and instead is performed by the signal processor 200 in the small cell controller 70. This means that the radio frequency signals are generated and decoded in the small cell controller 70, which is located at a point where wired power and backhaul are available, such as, for example, at the macro cell base station 10. This means that base-band or physical layer signals are generated and decoded by the signal processor 200. That is to say, the downlink physical layer radio frequency signals that would normally (via any amplifier and filters) be applied to an antenna in a conventional architecture are generated by the signal processor 200. Likewise, uplink physical layer radio frequency signals are received by the signal processor 200. These radio frequency signals are transmitted using the wireless link 60 between the small cell controller 70 and the small cell remote transceiver unit 40. It will be appreciated that in order to see a net reduction in processing complexity, a low complexity implementation of the wireless link 60 is beneficial.

As mentioned above, the small cell controller 70 can perform the processing for multiple small cells to provide for advanced signal processing or idle mode techniques.

Moving the signal processing to the small cell controller 70 provides for numerous advantages. For example, this minimises the energy consumption of the small cell remote transceiver unit 40 and makes it much easier to power this unit wirelessly. Since the small cell remote transceiver unit 40 simply translates light back to an original radio frequency signal and vice-versa, upgrades to new standards can be performed simply by upgrading the small cell controller 70 and the deployed small cell transceiver units 40 do not need to be changed. Centralised processing in the small cell controller 70 allows advanced signal processing techniques such as network MIMO to reduce interference between neighbouring cells without any increase in power required at the small cell remote transceiver unit 40. Since multiple small cell transceiver units 40 can be served by a single small cell controller 70, processing pooling gains can be achieved since not all cells would be fully loaded at all times (which reduces the cost and resources required by the processor 200). The smaller the small cells become, the more significant the variation of traffic and the higher the potential processor pooling gains become.

### Wireless Connection

Providing a wireless connection 60 or backhaul provides very high capacity between the small cell controller 70 and the small cell remote transceiver unit 40. A high capacity is required because moving the processing from the small cell remote transceiver unit 40 to the small cell controller 70 requires that instead of data, the radio frequency signals themselves need to be transmitted over the wireless optical link 60, which requires high data rates. In order to minimise the energy consumption at the small cell remote transceiver unit 40, the encoding and decoding of the optical signals needs to be very simple. Accordingly, no complicated encoding/decoding techniques (for example, for error correction) are typically used by the optical link 60, otherwise the benefits of moving the radio frequency processing to the small cell controller 70 would be negated by the optical link processing. Providing high directivity of the optical link 60 minimises the required transmission power of the optical link 60 between the small cell remote transceiver unit 40 and the small cell controller 70.

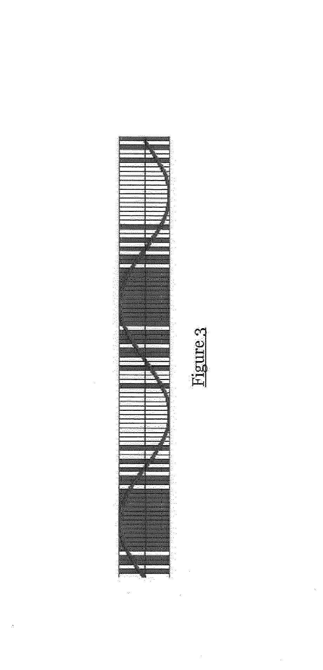

The need for such a high capacity, low complexity error protection scheme and low energy consumption requires the use of very high frequencies and a large available bandwidth. Accordingly, the wireless link comprises a free-space optical link which matches these requirements. The analogue radio frequency signals are converted to a digital signal using pulse density modulation and are transmitted uncoded, as illustrated in Figure 3. This enables the analogue radio frequency signals to be recovered with very low complexity using only a low-pass filter.

Using a free-space optical backhaul (between, for example, a laser and a photo detector) provides for various advantages. The high bandwidth of an optical link allows the transmission of digitised radio frequency signals using very simple transmitters and receivers, and is able to cope with future capacity demands. Also, this approach provides an energy-efficient wireless backhaul solution due to the high directivity (both for power and interference). There are no costs associated with using the optical spectrum. The link is immune to radio interference and allows high spatial re-use due to the high directivity of laser beams. The link is highly secure, since only digitised radio frequency signals are transmitted.

One potential drawback could be of use in areas with frequent foggy or impaired weather conditions. In that situation, more power may be required for the wireless backhaul transmissions to compensate for losses. Since the macro cell sizes decrease for capacity reasons, the required range for the backhaul link also becomes smaller when the small cell controller 70 is deployed at the macro cell base station site. This helps in such conditions.

Although in this embodiment an optical link is described, it will be appreciated that other wireless links may be provided such as, for example, a radio frequency link.

### Wireless power

In order to provide wireless power, high efficiency and high directivity are important. Accordingly, a very high frequency such as the wavelength of light (for example, using a laser beam) is very well suited. Using a laser allows focusing the energy beam only on the small cell remote transceiver unit 40 without side lobes (which would occur when using a radio frequency wireless link). The energy can be recovered using a matched photovoltaic collector. Whilst this suggests line of sight between the laser and the detector, this is also required for the wireless backhaul described above.

The conversion efficiency of current technology for photovoltaic cells with monochromatic light is around 50% (note that this is higher than with solar cells). Dependent on the maximum energy density, the size of the photovoltaic collector can be reduced compared to a solar cell. For example, when reducing the collector by a factor of around 30, the power density is then roughly 20 times that of sunlight, accounting for the higher efficiency compared to normal solar cells. Whilst this has the capacity to warm objects in the path, nothing burns.

Using a laser to provide wireless power has many advantages. For example, the power provided to the small cell remote transceiver unit 40 occurs both day and night. Idle mode control can be simplified by allowing joint decisions at the small cell controller 70 for multiple cells. Since power is provided via the optical link 60, switching it off reduces the power consumption of the small cell controller 40 to zero. Using optical wireless power also removes the need for back-up batteries at the small cell remote transceiver unit 40. This makes the small cell remote transceiver unit 40 smaller, lighter and more reliable. However, in areas with frequent foggy or adverse weather conditions, it may still be useful to keep a back-up battery in the small cell remote transceiver unit 40 for such events, to keep the power transmission efficiency high.

### Energy estimation

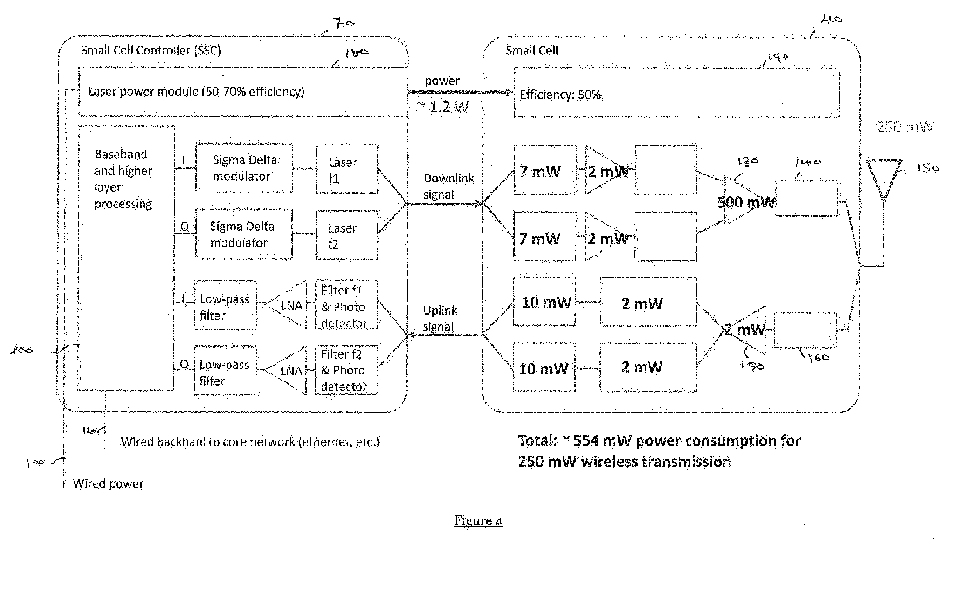

Figure 4 illustrates the estimated energy consumption of components of the small cell remote transceiver unit 40. As can be seen, in order to provide for a 250mW small cell, the small cell remote transceiver unit 40 has a power consumption of only around 550mW, which can be provided by a laser with a power of around 1.2 W.

Accordingly, embodiments simplify the deployment of small cells by removing the need for local power and backhaul at the deployment location. This approach has many benefits. For example, this architecture allows small cells to be deployed simply by attaching them to buildings, lampposts or other locations without the need for local power and backhaul. As a result, the deployment and operational costs reduce dramatically. The overall power consumption of the small cell is reduced to the minimum possible from an architectural perspective and is mainly limited by the downlink radio frequency power and power amplifier efficiency. The centralised processing in the small cell controller 70 allows advanced signal processing techniques such as network MIMO to reduce interference between neighbouring cells without any power increase at the small cell remote transceiver unit 40. Idle mode control can be simplified by allowing joint decisions to be made at the small cell controller 70 for multiple small cells. Since power is provided via an optical link, switching it off reduces the power consumption at the small cell remote transceiver unit to zero. Using wireless power removes the need for back-up batteries at the small cell remote transceiver unit 40. This makes the small cell remote transceiver unit 40 smaller, lighter and more reliable. Since the small cell remote transceiver unit simply translates between light and radio frequency signals, upgrades to new standards can be performed simply by upgrading the small cell controller 70. The deployed small cell transceiver units 40 do not need to be changed. Since multiple small cell transceiver units 40 can be served by a single small cell controller 70, processing pooling gains can be achieved since not all of the cells would necessarily be fully loaded at all times (which reduces the costs of processing). The smaller the cells become, the more significant the variation of traffic and the higher the potential pooling gains.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Abase station controller unit for supporting communication with user equipment of a wireless telecommunications network, said base station controller unit comprising:
processor logic operable to convert between backhaul signals for communication with a network node of said wireless telecommunications network and radio frequency signals for communication with said user equipment; and
a controller unit transceiver operable to convert between said radio frequency signals and wireless link signals and to support communication of said wireless link signals with a base station remote unit.

2. The base station controller unit of claim 1, wherein said radio frequency signals comprise physical layer signals and said processor logic is operable to encode between said backhaul signals and said physical layer signals.

3. The base station controller unit of claim 1 or 2, wherein said wireless link signals comprise optical signals and said controller unit transceiver is operable to convert between said radio frequency signals and said optical signals.

4. The base station controller unit of claim 3, wherein said controller unit transceiver comprises an encoder operable to encode said radio frequency signals as said optical signals and a decoder operable to decode said optical signals as said radio frequency signals.

5. The base station controller unit of claim 3 or 4, wherein said radio frequency signals comprise analogue signals and said optical signals comprise digital signals and said encoder is operable to encode said analogue radio frequency signals as said digital optical signals and said decoder is operable to decode said digital optical signals as said analogue radio frequency signals.

6. The base station controller unit of any preceding claim, wherein said encoder comprises a sigma delta modulator and said decoder comprises a low pass filter.

7. The base station controller unit of any preceding claim, wherein said controller unit transceiver comprises a laser and a detector operable to support communication of said wireless link signals.

8. The base station controller unit of claim 7, wherein said laser is operable to transmit said optical signals and said detector is operable to receive said optical signals.

9. The base station controller unit of any preceding claim, wherein said processor logic is operable to convert between a plurality ofbackhaul signals and a plurality of radio frequency signals for communication with user equipment.

10. The base station controller unit of any preceding claim, comprising a wireless link signal redirector operable to redirect a path of said wireless link signal between said controller unit and an associated remote unit.

11. Abase station remote unit for supporting communication with user equipment of a wireless telecommunications network, said base station remote unit comprising:
a remote unit transceiver operable to support communication of wireless link signals with a base station controller unit and to convert between said wireless link signals and radio frequency signals; and
a remote unit antenna operable to support communication of said radio frequency signals with said user equipment.

12. The base station remote unit of claim 11, wherein said remote unit transceiver is operable to convert transmitted downlink radio frequency signals to predistortion optical signals, and to transmit said predistortion optical signals to said base station controller unit.

13. The base station remote unit of claim 11 or 12, comprising an extractor operable to extract energy from a wireless link signal to power that remote unit.

14. Abase station controller unit method for supporting communication with user equipment of a wireless telecommunications network, said method comprising:
(i) converting between backhaul signals for communication with a network node of said wireless telecommunications network and radio frequency signals for communication with said user equipment; and
(ii) converting between said radio frequency signals and wireless link signals and supporting communication of said wireless link signals with a base station remote unit.

15. A base station remote unit method for supporting communication with user equipment of a wireless telecommunications network, said method comprising:
(i) supporting communication of wireless link signals with a base station controller unit and converting between said wireless link signals and radio frequency signals; and
(ii) supporting communication of said radio frequency signals with said user equipment.

## Amended claims

### Amended claims in accordance with Rule 137(2) EPC.

**1.** A base station remote unit (40) for supporting communication with user equipment of a wireless telecommunications network, said base station remote unit comprising:
a remote unit transceiver (130-170) operable to support communication of wireless link signals (60A; 60B) with a base station controller unit (70) and to convert between said wireless link signals and radio frequency signals;
a remote unit antenna (150) operable to support communication of said radio frequency signals with said user equipment; and
an extractor (190) operable to extract energy from a wireless link signal to power said base station remote unit.

**2.** A base station remote unit of claim 1, wherein the radio frequency signals comprise physical layer signals and the processor logic is operable to encode between the backhaul signals and the physical layer signals.

**3.** A base station remote unit of claim 1 or 2, wherein the wireless link signals comprise optical signals and the remote unit transceiver converts between the radio frequency signals and the optical signals.

**4.** A base station remote unit of any preceding claim, wherein the remote unit transceiver each comprise an encoder operable to encode the radio frequency signals as the optical signals and a decoder operable to decode the optical signals as the radio frequency signals.

**5.** A base station remote unit of claim 4, wherein the radio frequency signals comprise analogue signals and the optical signals comprise digital signals and the encoder is operable to encode the analogue radio frequency signals as the digital optical signals and the decoder is operable to decode the digital optical signals as the analogue radio frequency signals.

**6.** A base station remote unit of claim 4 or 5, wherein the encoder comprises a sigma delta modulator and the decoder comprises a low pass filter.

**7.** A base station remote unit of any preceding claim, wherein the remote unit transceiver each comprises a laser and a detector operable to support communication with the wireless link signals.

**8.** A base station remote unit of claim 7, wherein the laser is operable to transmit the optical signals and the detector is operable to receive the optical signals.

**9.** A base station remote unit of any preceding claim, wherein the remote unit transceiver is operable to convert downlink optical signals to downlink radio frequency signals, and to receive uplink radio frequency signals and to convert the uplink radio frequency signals to uplink optical signals, and to transmit the uplink optical signals.

**10.** A base station remote unit of any preceding claim, wherein the base station remote unit comprises a plurality of the remote units, each operable to support communication with the controller unit using a corresponding plurality of wireless link signals.

**11.** A base station remote unit of any preceding claim, wherein the remote unit transceiver comprises the energy extractor operable to extract energy from the wireless link signals to power that remote unit.

**12.** A base station remote unit of any preceding claim, wherein the extractor comprises a photovoltaic collector.

**13.** The base station remote unit of claim 1, wherein said remote unit transceiver is operable to convert transmitted downlink radio frequency signals to predistortion optical signals, and to transmit said predistortion optical signals to said base station controller unit.

**14.** A base station remote unit method for supporting communication with user equipment of a wireless telecommunications network, said method comprising:
(i) supporting communication of wireless link signals (60A; 60B) with a base station controller unit (70) and converting between said wireless link signals and radio frequency signals;
(ii) supporting communication of said radio frequency signals with said user equipment; and
(iii) extracting energy from a wireless link signal to power that remote unit.
